# EUROPÄISCHE PATENTSCHRIFT

(11) **EP 3 455 138 B1**
(45) Veröffentlichungstag und Bekanntmachung des Hinweises auf die Patenterteilung: **24.06.2020**
(21) Anmeldenummer: 17731062.0
(22) Anmeldetag: 12.05.2017
(51) Int. Cl.: B64G 1/10, B64G 1/64, B64G 1/12

(54) **RAUMKÖRPER**
SPATIAL BODY
CORPS SPATIAL

(30) Priorität: 13.05.2016 DE 102016108951
(43) Veröffentlichungstag der Anmeldung: 20.03.2019
(73) Patentinhaber: IBOSS GmbH, 52068 Aachen (DE)
(72) Erfinder: KREISEL, Jörg, 42897 Remscheid (DE)
(74) Vertreter: Willems, Volker
(86) Internationale Anmeldenummer: PCT/DE2017/100401
(87) Internationale Veröffentlichungsnummer: WO 2017/194058

(56) Entgegenhaltungen:
- EP-A1- 0 196 793
- WO-A1-92/00223
- US-A- 4 744 533
- US-A- 4 872 625
- US-A1- 2016 130 019
- US-B1- 8 006 937

## Beschreibung

### Technisches Gebiet

Die Erfindung betrifft einen Raumkörper mit wenigstens zwei Raummodulen, welche untereinander austauschbar verbindbar sind, umfassend
a) jeweils wenigstens eine verschließbare Verbindungsöffnung an den Raummodulen, über welche beim Verbinden der Raummodule ein optionaler Durchgang vorgesehen ist,
b) jeweils wenigstens eine Kopplungseinrichtung, welche die Raummodule verbindet,
*c*) jeweils wenigstens eine Versorgungsschnittstelle zum Koppeln einer Versorgungsleitung der Raummodule
*d*) *Ressourcen zur Versorgung des Raumkörpers (10) dezentral jeweils in den Raummodulen verteilt sind, wobei ein Ressourcenaustausch zwischen den Raummodulen und*/*oder ein Ressourcenverbrauch über Versorgungsleitungen erfolgt.*

### Beschreibung

Solche Raumkörper werden vorwiegend in der Luft- und Raumfahrt z.B. bei Satelliten eingesetzt. Dabei kann ein Raummodul mit einem weiteren Raummodul gekoppelt werden. Beim Koppeln der Raummodule werden Verbindungsschnittstellen, welche jedes Raummodul aufweisen muss, miteinander verbunden. Über die Verbindungsschnittstellen werden die Versorgungsleitungen der Raummodule miteinander verbunden, überwacht und gesteuert.

### Stand der Technik

Aus der DE 10 2014 104 695 A1 ist ein Modul, zum Aufbau eines modular aufgebauten Raumflugkörpers, mit mindestens einer Kopplungseinrichtung bekannt. Weiterhin wird dort eine androgyne Kopplungseinrichtung zum Verbinden von Modulen beschrieben. Die Kopplungseinrichtung dient zum Aufbau eines modular aufgebauten Raumflugkörpers, wobei die Kopplungseinrichtung zum Verbinden der Module an eine identisch aufgebaute weitere androgyne Kopplungseinrichtung ankoppelbar ist und dazu mehrere Koppelelemente aufweist. Der Innenraum eines hülsenförmigen Linearführungselements bildet dabei eine Erweiterungsöffnung für Schnittstellen zur Netzanbindung, Datenanbindung, hydraulischen oder pneumatischen Anbindung der beteiligten Module untereinander. Das hülsenförmige Linearführungselement ist von ebenfalls hülsenförmigen, ineinander geschachtelten Koppelelementen umgeben.

EP 0 196 793 A1 zeigt einen modular aufgebauten Satelliten dessen Module Kopplungseinrichtungen zum Verbinden der einzelnen Module untereinander aufweisen. Jede dieser androgynen Kopplungseinrichtungen ist für ein Ankoppeln und ein Verbinden mit einer identisch aufgebauten Koppeleinrichtung eines anderen Moduls eingerichtet und weist dazu mehrere Koppelelemente auf. Mit einer solchen androgynen Kopplungseinrichtung (androgynen Schnittstelle) für orbital wartbare Satellitensysteme wird die Rekonfiguration eines aus Bausteinen bestehenden, modularen Satellitensystems durch robotische Manipulation ermöglicht.

Aus der WO 92/00223 ist ein unbemanntes Raumfahrzeug bekannt. Das Raumfahrzeug ist modular aufgebaut. Dabei werden an einen zentralen Mutterkörper diverse Tochter-Ladekörper angedockt. Hierfür sind standardisierte Schnittstellen vorgesehen, welche es dem Mutterkörper ermöglichen, z.B. Steuerungs-, Daten- und elektrische Energie mit den Tochter-Ladekörpern auszutauschen. Die Tochter-Ladekörper sind keine autarken Systeme und insofern von dem Mutterkörper weitestgehend abhängig. Die Tochter-Ladekörper dienen lediglich dazu, dem Mutterkörper weitere einzelne Funktionen zur Verfügung zu stellen.

*Die* EP 0196793 *betrifft ein modulares Raumfahrzeugsystem, das durch Verbinden von im wesentlichen identischen Roumtahrzeugmodulen gebildet wird. Dabei wird die Konstruktion der einzelnen Raumfahrzeugmodule zum Zusammenbauen des modularen Raumfahrzeugsystems verwendet. Das System kann durch die Verbindung von im wesentlichen identischen Raumfahrzeugmodulen erweitert werden, die jeweils unabhängig voneinander betrieben werden können. Jedes Raumfahrzeugmodul kann dabei auch unabhängig als beaufsichtigte Weltraumplattform betrieben werden, die für Industrie- oder Forschungszwecke geeignet ist. Das modulare Raumfahrzeugsystem umfasst mindestens zwei Rαumfahrzeugmodule, die einen Anlegemechanismus zum Koppeln zweier Raumfahrzeugmodule aufweisen. Mit Überbrückungsleitungen wird in einem Vorraumbereich der Anlegemechanismen für Fluidverbindungen zwischen den beiden Raumfahrzeugmodulen hergestellt. Die Anlegemechanismen werden an ebenen Seitenbereichen eines Raumfahrzeugmoduls ermöglicht, um das Modul mit anderen identischen Modulen Seite an Seite zu verbinden, wodurch ein modulares Raumfahrzeug gebildet wird. In Bezug auf die äußere Hülle steht der Anlegemechanismus mit dem Inneren des inneren Körpers durch einen kurzen Tunnel oder Durchgang in Verbindung.*

Die bekannten Raummodule haben den Nachteil, dass sie zwar miteinander Koppeln können, aber nicht in beliebiger Aufeinanderfolge. Die Raummodule lassen sich beispielsweise an einen zentralen Satelliten ankoppeln, aber sie können bei den bekannten Systemen nicht beliebig zusammengesetzt werden. Es bedarf vor allem hinsichtlich der Steuerung der Raummodule einer genauen Planung. Hierfür ist regelmäßig ein eigenes zentrales Steuermodul für den gesamten Raumköper erforderlich, welches die erforderlichen Steuerungsaufgaben der einzelnen Raummodule übernimmt und koordiniert. Die Rechnerkapazität der Steuerung geht dabei mit der Anzahl der gekoppelten Raummodule einher. Je größer der Raumkörper ist, desto umfangreicher ist auch dessen Steuerung. Um Ausfälle der Steuerung zu kompensieren werden bei Bedarf auch redundante Systeme verwendet. Dieses ist ein aufwendiges System, welches die Kosten beispielsweise für die Raumfahrt erheblich verteuert.

### Offenbarung der Erfindung

Aufgabe der Erfindung ist es daher, einen Raumkörper mit verschiedenen Raummodulen zu schaffen, der beliebig erweiterbar ist und über eine hohe Ausfallsicherung verfügt.

Erfindungsgemäß wird die Aufgabe dadurch gelöst, dass bei einem Raumkörper mit wenigstens zwei Raummodulen der eingangs genannten Art
*e) die Versorgungsschnittstelle magnetisch und*/*oder elektromagnetisch koppelbar vorgesehen ist und einen andockbaren Mehrfachanschluss umfasst, der für unterschiedliche Versorgungsleitungen gleichzeitig vorgesehen ist.*

Die Erfindung beruht auf dem Prinzip einen intelligenten Raumkörper, insbesondere für extreme Bedingungen, wie sie in der Luft- und Raumfahrt oder unter Wasser herrschen, zu schaffen, der beliebig erweiterbar ist. Je mehr Raummodule gekoppelt werden, desto komplexer ist auch deren Steuerung. Jedes Raummodul bringt bei vorliegender Erfindung seine eigenen Ressourcen mit, so dass die Versorgung im Raumkörper dezentral ausgebildet werden kann. Hierdurch kann ein Raummodul abgekoppelt werden, ohne dass die Versorgung einer erforderlichen Ressource unterbrochen wird. Eigene redundante Systeme sind ferner nicht mehr erforderlich, da durch die Vernetzung bei einem Ressourcenausfall im System diese Ressourcen von einem oder mehreren anderen Raummodulen ersetzt werden können. Zentrale Ressourcen sind dabei eher ein Hindernis, da diese bei Erweiterungen des Raumkörpers durch weitere Raummodule immer entsprechend dimensioniert werden müssen. Die Steuerung wird bei der dezentralen Anordnung über eine geeignete Netzstruktur aus geeigneten Versorgungsleitungen für die Ressourcen beim Koppeln miteinander verbunden. Die Netzstruktur setzt standardisierte Verbindungsschnittstellen voraus.

Als vorteilhafte Ausgestaltung des erfindungsgemäßen Raumkörpers mit wenigstens zwei Raummodulen hat sich erwiesen, wenn eine prozessorgesteuerte Steuerung zur Steuerung der Raummodule vorgesehen ist, wobei die Steuerung als eine Ressource zur Steuerung der Raummodule vorgesehen ist, wobei die Steuerung als eine Ressource zur Versorgung des Raumkörpers dezentral jeweils in den Raummodulen vorgesehen ist und über die Versorgungsschnittstelle zur koordinierten Steuerung des Raumkörpers miteinander vernetzt sind. In jedem Raummodul ist eine prozessorgesteuerte Steuerung vorgesehen, welche z.B. jeweils von einer geeigneten Rechnereinheit gebildet wird. Die prozessorgesteuerte Steuerung eines Moduls ist grundsätzlich autark in einem Raummodul arbeitsfähig. Sie werden aber im Verbund des Raumkörpers derart miteinander verschaltet, so dass sie eine gemeinsame Rechen- bzw. Steuerkapazität bilden.

Vorzugsweise ist die Steuerung dann als neuronale Netzstruktur ausgebildet. Eine neuronale Netzstruktur ist in der Lage zu lernen. Damit können erlernte Aufgaben selbständig von dem Raumkörper durchgeführt werden. Eine solche Netzstruktur für einen Raumkörper macht ihn flexibel und besonders anpassungsfähig an extreme Umstände.

Eine vorteilhafte Ausbildung des erfindungsgemäßen Raumkörpers besteht ferner darin, dass die Gasressourcen dezentral jeweils in den Raummodulen zur Versorgung des Raumkörpers vorgesehen sind. Die Gasressourcen sind als Ressource somit in jedem Raummodul, also dezentral im Raumkörper, vorhanden. Die Gasressourcen lassen sich dabei über geeignete Versorgungsleitungen zwischen den Raummodulen verschieben und ggf. zu Verbrauchern hinführen.

Analog zum Gas besteht in einer bevorzugten Ausgestaltung des erfindungsgemäßen Raumkörpers mit wenigstens zwei Raummodulen darin, dass Flüssigkeitsressourcen dezentral jeweils in den Raummodulen zur Versorgung des Raumkörpers (10) vorgesehen sind. Die Flüssigkeitsressourcen sind ebenfalls als Ressource somit in jedem Raummodul, also dezentral im Raumkörper, vorhanden. Die Flüssigkeitsressourcen lassen sich dabei über geeignete Versorgungsleitungen zwischen den Raummodulen verschieben und ggf. ebenfalls zu Verbrauchern hinführen.

Eine bevorzugte Variante des erfindungsgemäßen Raumkörpers wird weiterhin darin zu sehen sein, dass Thermalressourcen dezentral jeweils in den Raummodulen zur Versorgung des Raumkörpers wahlweise zum Kühlen oder zum Heizen vorgesehen sind. Oft muss ein Thermalaustausch zwischen den Raummodulen möglich sein. Beispielsweise Wärme- und/oder Kältespeicher werden dazu in den Raummodulen vorgesehen. Die thermische Energie wird dabei mittels geeigneten Energieträgers für die thermische Energie über Versorgungsleitungen je nach Bedarf zwischen den Raummodulen verschoben.

Eine weitere vorteilhafte Ausgestaltung des erfindungsgemäßen Raumkörpers besteht darin, dass die Ressourcen für elektrische Energie dezentral jeweils in den Raummodulen zur Versorgung des Raumkörpers vorgesehen sind. Sowohl elektrische Speicher, wie Batterien und Akkumulatoren oder Elektrogeneratoren, wie z.B. Photovoltaikmodule oder Brennstoffzellen, werden als Ressource dezentral im Raumkörper angeordnet. Die elektrischen Ressourcen sind in jedem Raummodul, also auch dezentral im Raumkörper, vorhanden. Die elektrischen Ressourcen lassen sich dabei über geeignete elektrische Leiter zwischen den Raummodulen verschieben und ggf. zu Verbrauchern hinführen.

In einer weiteren bevorzugten Ausgestaltung des erfindungsgemäßen Raumkörpers mit wenigstens zwei Raummodulen, umfasst die Versorgungsschnittstelle einen genormten andockbaren Mehrfachanschluss, der für unterschiedliche Versorgungsleitungen gleichzeitig vorgesehen ist. Oft besteht das Problem, dass die Raummodule nicht kompatibel miteinander gekoppelt werden können. Daher ist es bei der Erfindung besonders vorteilhaft, wenn ein genormter Mehrfachanschluss vorgesehen ist, welcher nach Möglichkeit sämtliche Anschlüsse realisiert. Es müssen keine separaten Schnittstellen für die einzelnen Raummodule geschaffen werden. Dies wird alles in dem Mehrfachanschluss für die unterschiedlichsten Versorgungsleitungen zusammengefasst. Vorzugsweise umfasst der Mehrfachanschluss auch einen Anschluss für Gas und/oder einen Anschluss für Flüssigkeit einen Anschluss für Kommunikation und/oder einen Anschluss für elektrische Energie. Gerade bei der vernetzten Steuerungsstruktur ist es wünschenswert die Anschlüsse zu standardisieren. Dies wird erheblich einfacher mit standardisierten Mehrfachanschlüssen erreicht. Ein optionaler Anschluss für Thermalenergie sorgt bei Bedarf für eine optimale Verteilung der Wärme zwischen den Raummodulen.

Eine vorteilhafte weitere Ausbildung des erfindungsgemäßen Raumkörpers mit wenigstens zwei Raummodulen besteht ferner darin, dass der Mehrfachanschluss eine Anschlusseinrichtung für Druckleitungen enthält. Oft müssen auch Druckleitungen zwischen den Raummodulen gekoppelt werden. Die Druckleitungen werden beispielsweise für pneumatischen oder hydraulischen Druck verwendet. Der Mehrfachanschluss hat daher vorzugsweise eine Anschlusseinrichtung, welche den erforderlichen Drücken von Flüssigkeiten oder Gas standhält. Über die Druckleitungen können beispielsweise hydraulische oder pneumatische Maschinen angesteuert werden. So lassen sich auf einfache Art Roboter oder deren bewegliche Teile ansteuern.

Eine besondere Variante des erfindungsgemäßen Raumkörpers mit wenigstens zwei Raummodulen besteht darin, dass die Versorgungsschnittstelle mechanisch koppelbar vorgesehen ist. Diese Maßnahme dient dazu möglichst schnell eine Kopplung der Schnitzstellen zwischen zwei Raummodulen herbeizuführen. Dies wird einfach über einen mechanischen, magnetischen oder elektromagnetischen Kopplungsmechanismus gelöst. Auch Kombinationen dieser Mechanismen sind dabei denkbar.

Weiterhin besteht eine vorteilhafte Ausbildung des erfindungsgemäßen Raumkörpers mit wenigstens zwei Raummodulen darin, dass die Versorgungsschnittstelle zentral verriegelbar ausgebildet ist. Hierdurch wird verhindert, dass sich die Versorgungsschnittstelle nach einem Kopplungsvorgang selbstständig wieder löst. Erst wenn ein Verriegelungsmechanismus wieder gelöst wird, kann die Verbindung der Versorgungsschnittstelle gelöst werden. Die Verriegelung erfolgt dabei vorzugsweise zentral, sodass alle gewünschten Schnittstellen eines Moduls gleichzeitig gelöst werden.

Ein bevorzugte Variante des erfindungsgemäßen Raumkörpers ergibt sich dadurch, dass zur Energieversorgung ein Energiespeicher und/oder eine solare Energieversorgung vorgesehen ist. Die Energieversorgung des Raumkörpers wird vorzugsweise dadurch gewährleistet, dass ein Energiespeicher, wie ein Akkumulator, vorgesehen ist. Der Energiespeicher kann dabei über Solarzellen aufgeladen werden. Verbrennungsvorgänge sind bei Solarzellen nicht gegeben. Solare Energie ist praktisch unbegrenzt vorhanden. Die Energie für einen erfindungsgemäßen Raumkörper ist damit vorteilhaft gegeben.

Eine besondere Ausgestaltung des erfindungsgemäßen Raumkörpers wird dadurch erzielt, dass der Raumkörper als Druckbehälter ausgestaltet ist. Diese Maßnahme dient dazu, dass der Raumkörper auch größere Druckdifferenzen aushalten kann. Größere Druckdifferenzen treten sowohl im Weltraum, als auch unter Wasser auf. Im Weltraum ist der innere Druck relativ groß, während unter Wasser der äußere Druck recht groß ist.

In einer vorteilhaften Ausgestaltung des erfindungsgemäßen Raumkörpers mit wenigstens zwei Raummodulen, weisen die Raummodule eine stapelbare Geometrie auf. Der Vorteil der stapelbaren Geometrie liegt darin, dass sich beliebig viele Raummodule verbinden und containerartig stapeln lassen. Der Raumkörper lässt sich damit auf eine beliebige Größe, sofern die statische Stabilität gegeben ist, ausweiten. Die Raummodule können hierbei verschiedene Komponenten enthalten, die für die jeweils gewünschten Anforderungen benötigt werden. Vorzugsweise weisen dann die Raummodule des Raumkörpers eine kubische Geometrie auf. Kubische Raummodule lassen sich besonders gut in alle möglichen Richtungen stapeln.

Für die Stapelbarkeit ist es erforderlich, dass nicht nur eine Kopplungseinrichtung bzw. eine Versorgungsschnittstelle vorhanden ist. Bei einer einigen Kopplungseinrichtung pro Raummodul könnte nämlich nur ein einziges Raummodul an ein anderes angedockt werden, welche dann den Raumkörper bilden. Weiteres Andocken von Raummodulen wär somit nicht möglich. Eine weitere besondere Ausgestaltung des erfindungsgemäßen Raumkörpers sieht daher vor, dass die Versorgungsschnittstelle jeweils an wenigstens zwei Seiten eines Raummoduls vorgesehen ist. Dadurch können also immer mehr als zwei Raummodule zu einem Raumkörper zusammengefasst werden.

Weiterhin lässt sich eine besondere Variante des erfindungsgemäßen Raumkörpers erzielen, in dem eine innere und/oder äußere Isolierung an den Raummodulen vorgesehen ist. Diese vorteilhafte Maßnahme dient dazu, dass der Raumkörper sowohl gegen Kälte, als auch gegen Wärme isoliert ist. Der Raumkörper soll für extreme Bedingungen vorgesehen sein. Dazu zählen auch thermische Anforderungen. Hiergegen hilft eine entsprechende Isolierung. Auch gegen Strahlung kann eine besondere Isolierung als Schutz vorgesehen sein. Die Isolierung kann dabei nicht nur an den Außenflächen, sondern auch an den Innenflächen des Raumkörpers bzw. der Raummodule angeordnet sein.

Die Funktionen und der Status der Raummodule muss bei extremen Einsätzen des Raumkörpers ständig überwacht werden. Eine besondere Ausbildung des erfindungsgemäßen Raumkörpers mit wenigstens zwei Raummodulen ergibt sich dadurch, dass eine prozessorgesteuerte Überwachungseinrichtung für die Raummodule vorgesehen ist. Die Überwachungseinrichtung überwacht den Zustand des Raumkörpers und signalisiert ggf. Fehlfunktionen oder dergleichen.

Eine weitere zweckmäßige Ausbildung des erfindungsgemäßen Raumkörpers ergibt sich dadurch, dass die Überwachungseinrichtung einen wahlweise oder in Kombination einen optischen Sensor, einen Beschleunigungssensor, einen Bewegungssensor, Temperatursensor oder einen Positionssensor umfasst. Mit diesen Sensoren ist die Überwachungseinrichtung in der Lage, einen Teil der Umwelt zu erfassen und zu verarbeiten. Die Auswertung der Meßsignale der Sensoren hilft beim Feststellen des Zustands des Raumkörpers.

Des Weiteren lässt sich eine vorteilhafte Ausgestaltung des erfindungsgemäßen Raumkörpers erzielen, wenn wenigstens ein Raummodul einen Antrieb aufweist. Mit dem Antrieb wird dem Raumkörper ermöglicht sich zu bewegen. Die Art des Antriebs und Bewegung ist natürlich von der Umgebung abhängig. Der Antrieb unter Wasser wird üblicherweise ein anderer Antrieb sein, als er in der Luft oder auf dem Land verwendet wird. In einer zweckmäßigen Ausbildung des erfindungsgemäßen Raumkörpers weist das Raummodul mit Antrieb eine Antriebssteuerung auf. Die Antriebssteuerung steuert den Antrieb beispielsweise in Beschleunigung und Richtung.

In einer besonders zweckmäßigen Variante des erfindungsgemäßen Raumkörpers ist der Raumkörper in der Luft- und Raumfahrt und/oder zur Verwendung Unterwasser oder in lebensunfreundlicher Umgebung vorgesehen.

Vorzugsweise ist in einer besonderen Ausgestaltung des erfindungsgemäßen Raumkörpers innerhalb eines Raummoduls des Raumkörpers ein interner Versorgungszugang vorgesehen. Häufig sind Anforderungen an die Raumkörper, dass im Inneren auf diverse Ressourcen, wie beispielsweise Druckluft oder Wasser, zugegriffen werden kann. Ein entsprechender Versorgungszugang ist daher in wenigstens einem Raummodul des Raumkörpers vorgesehen. Ein vorteilhafter Aspekt der Erfindung ergibt sich dabei dadurch, dass bei dem Raumkörper der interne Versorgungszugang einen Anschluss für Gas, einen Anschluss für Flüssigkeit, einen Anschluss für Kommunikation und/oder einen Anschluss für thermische Energie und/oder einen Anschluss für elektrische Energie umfasst. Diese Versorgungszugänge sind besonders wichtig, wenn Experimente in einen solchen Raumkörper durchgeführt werden. Die Experimentatoren müssen auf die verschiedenen Ressourcen, die zur Verfügung stehen, zugreifen können.

Weitere Ausgestaltungen und Vorteile ergeben sich aus dem Gegenstand der Unteransprüche, sowie den Zeichnungen mit den dazugehörigen Beschreibungen. Ein Ausführungsbeispiel ist nachstehend unter Bezugnahme auf die beigefügten Zeichnungen näher erläutert. Dabei soll sich die Erfindung nicht auf das Ausführungsbeispiel beschränken. Vielmehr sind auch Ausführungen angedacht, die jetzt und zukünftig in äquivalenter Weise sich dem Fachmann auch mit anderen technischen Hilfsmitteln ergeben.

### Kurze Beschreibung der Zeichnung

- Fig. 1: zeigt schematisch einen erfindungsgemäßen Raumkörper mit zwei zunächst getrennten Raummodulen.
- Fig. 2: zeigt eine Versorgungsschnittstelle für einen erfindungsgemäßen Raumkörper mit wenigstens zwei Raummodulen.
- Fig. 3: zeigt einen Raumkörper mit mehreren gestapelten Raummodulen.

### Bevorzugtes Ausführungsbeispiel

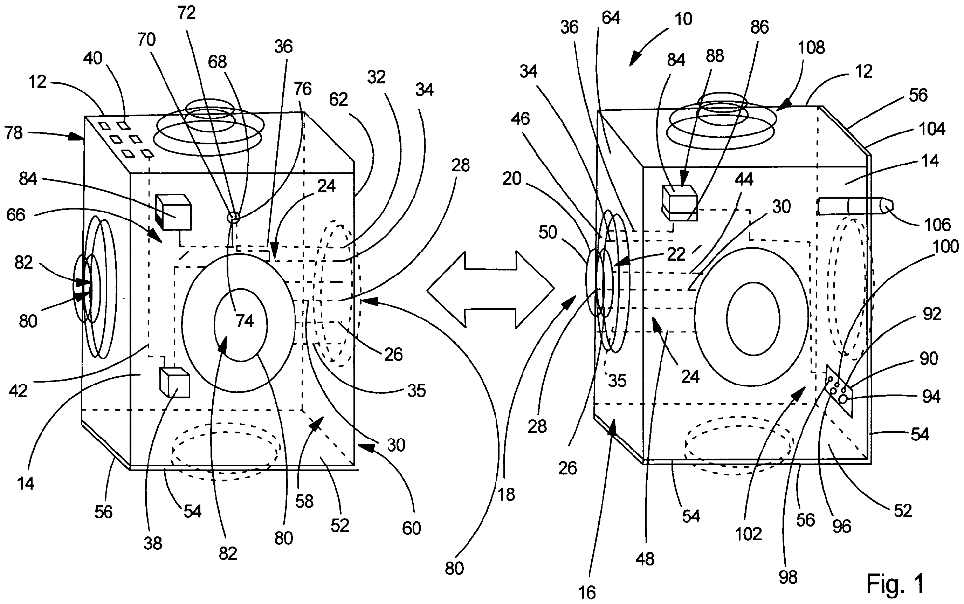

In Fig. 1 wird mit 10 ein erfindungsgemäßer Raumkörper bezeichnet. Der Raumkörper 10 besteht aus Raummodulen 12, die sich lös- und austauschbar zusammensetzen lassen. Die Raummodule 12 sind im vorliegenden Ausführungsbeispiel als zwei Quader 14 ausgebildet. Die Quader 14 lassen sich besonders gut stapeln und zusammensetzen. Beim Stapeln lassen sich immer zwei Stirnflächen 16 aufeinandersetzen. Andere Formen, wie beispielsweise Oktaeder oder sonstige stapelbare Polyeder können als Raummodul 12 ebenfalls verwendet werden. Jedes Raummodul 12 verfügt wenigstens an einer Stirnfläche 16 über eine Kopplungseinrichtung 18. An der Kopplungseinrichtung 18 ist eine Versorgungsschnittstelle 20 vorgesehen.

Die Versorgungsschnittstelle 20 besteht im vorliegenden Ausführungsbeispiel aus einem Mehrfachanschluss 22, welcher unterschiedliche Versorgungsleitungen 24 verbindet. Mit dem Mehrfachanschluss 22 lassen sich die Versorgungsleitungen 24 der Raummodule 12 in einer standardisierten Weise miteinander verbinden. Der Mehrfachanschluss 22 enthält insbesondere einen Anschluss 26 für Gas, wodurch beispielsweise Sauerstoff oder Atemluft bzw. Abluft geführt werden kann. Außerdem enthält der Mehrfachanschluss 22 einen Anschluss 28 für Flüssigkeiten. Über einen solchen Flüssigkeitsanschluss 28 wird beispielsweise Wasser durch Flüssigkeitsleitungen 30 gepumpt. Über die Flüssigkeitsleitungen 30 kann eine erwärmte Flüssigkeit zum Heizen eines oder aller Raummodule 12 geleitet werden. Weiterhin umfasst der Mehrfachanschluss 22 einen Kommunikationsanschluss 32, einen Elektroanschluss 34 für elektrische Energie und einen Anschluss 35 für thermische Energie. Über den Anschluss 35 für thermische Energie wird der Wärmehaushalt des Gesamtsystems geregelt, Wärmeenergien verteilt und ausgeglichen.

Mit dem Kommunikationsanschluss 32 können Datenleitungen 36 miteinander gekoppelt werden. Die Datenleitungen 36 dienen zum Austauschen von digitalen Daten zwischen den Raummodulen 12. Die Datenleitungen 36 sind im vorliegenden Ausführungsbeispiel als Kabel ausgebildet. Grundsätzlich lässt sich der Datenaustausch zwischen den Raummodulen 12 auch über elektromagnetische Wellen, wie Radiowellen oder Lichtwellen, realisieren. Hierfür sind dann geeignete Sende- und Empfangseinheiten vorzusehen.

Der Elektroanschluss 34 ist für den Energieaustausch von elektrischer Energie zwischen den Raummodulen 12 vorgesehen. Dabei kann ein Energiegenerator 38 für elektrische Energie an bzw. in einem Raummodul 12 vorgesehen sein. Der Energiegenerator 38 ist z.B. ein Akkumulator, welcher über Solarzellen 40 gespeist wird. Die Energie des Energiegenerators 38 wird über elektrische Leitungen 42, üblicherweise Kabel, in den Raummodulen 12 verteilt.

Solche Raummodule 12 sind grundsätzlich auch für Robotik geeignet. Daher sind Druckleitungen 44 für Flüssigkeiten und Gase vorgesehen, mit welchen z.B. Roboterteile pneumatisch oder hydraulisch angetrieben werden können. Aber auch Arbeitsgase können mit erhöhtem Druck durch die Druckleitungen 44 geführt werden.

Die Kopplungseinrichtung 18 enthält magnetische Kopplungsmechanismen 46, wodurch die Versorgungsschnittstellen 20 paarweise gekoppelt werden können. Der magnetische Kopplungsmechanismus 46 weist zur Verstärkung der Anziehungskraft jeweils mindestens einen Elektromagneten 48 auf. Die Raummodule 12 bzw. die Kopplungseinrichtung 18 ziehen sich über den magnetischen Kopplungsmechanismus 46 gegenseitig an. Nachdem die Kopplungseinrichtungen 18 und die Versorgungsschnittstellen 20 der Raummodule 12 miteinander verbunden sind, greift ein mechanischer Verriegelungsmechanismus 50 zur Sicherung ein. Der Elektromagnet 48 des magnetischen Kopplungsmechanismus 46 kann nun bei Bedarf, d.h. beispielsweise um Energie zu sparen, ausgeschaltet werden.

Der Raumkörper 10 bzw. dessen Raummodule 12, aus denen der Raumkörper 10 besteht, sind als Druckkörper 52 ausgebildet. Die Druckkörper 52 sind besonders für den Einsatz beispielsweise unter Wasser erforderlich. Die Raummodule 12 müssen Unterwasser, je nach Tiefe, extrem hohe Drücke aushalten. Andererseits ist die Druckdifferenz der Raummodule 12 zum Vakuum, welches im Weltraum herrscht, ebenfalls auszuhalten. Für extreme Temperaturen, sowohl in den Wärmebereich, als auch in den Kältebereich ist eine geeignete wärmedämmende Isolierung 54 vorgesehen. Die Isolierung 54 verfügt über eine Schutzschicht 56, welche den Raumkörper 10 auch gegen Strahlungen schützt. Die Isolierung 54 kann an der Innenseite 58 der Raummodule 12 oder auch an der Außenseite 60 der Raummodule vorgesehen sein.

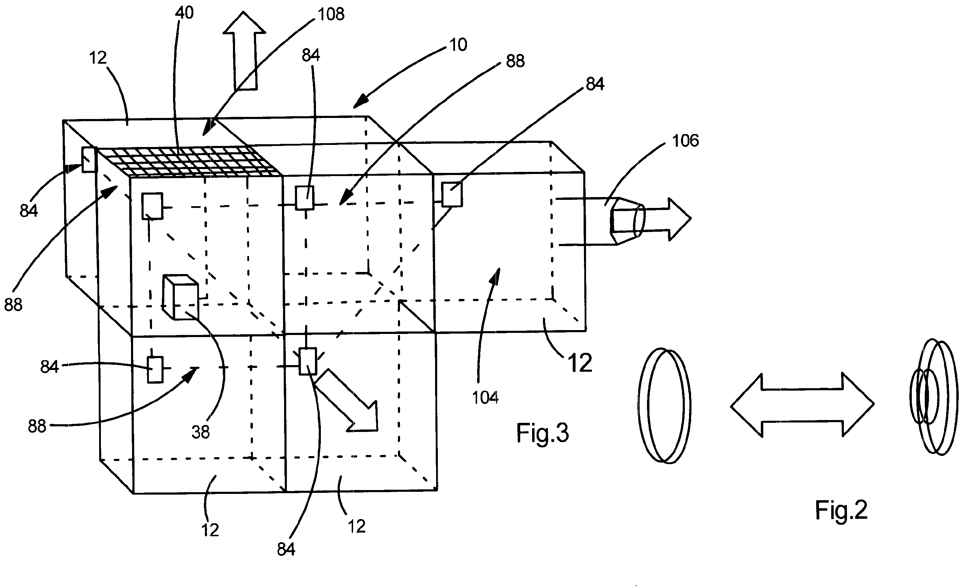

Die Raummodule 12 des Raumkörpers 10 verfügen über eine kubische Geometrie, weil solche geometrischen Körper sich sehr gut stapeln lassen. Dabei kann an jeder Außenfläche ein anderes Raummodul 12 angekoppelt werden. Grundsätzlich sind auch Geometrien von Raummodulen denkbar, die sich jedoch gut stapeln lassen müssen. Stapeln heißt in diesem Zusammenhang, dass wenigstens eine ebene Außenfläche 62 von einem Raummodul 12 parallel gegenüber der ebenen Außenfläche 64 eines anderen Raummoduls 12 liegt und sich so zusammenfügen lässt. Die Stapelbarkeit ermöglicht den Raumkörper 10 beliebig in seiner Größe zu erweitern. Jedem Raummodul 12 kann eine eigene Funktion zugeordnet werden. So lassen sich beliebige Konstellationen von Raumkörpern 10 erstellen, wie auch gut in Fig. 3 zu sehen ist.

Im Innenraum 66 der Raummodule 12 sind interne Versorgungszugänge 68 vorgesehen. Dabei ist ein interner Anschluss 70 für Gas, ein Anschluss 72 für Flüssigkeit, ein Datenanschluss 74 und ein Anschluss 76 für elektrische Energie vorgesehen. Die Versorgungszugänge 68 ermöglichen es auch im Innenraum 66 der Raummodule 12 mit entsprechenden Ressourcen versorgt zu werden. Sofern ein Raummodul 78 beispielsweise für Experimente genutzt wird, kann ein Experimentator auf die Versorgungszugänge 68 zurückgreifen.

Die Raummodule 12 verfügen über verschließbare Öffnungen 80, welche als Durchgänge 82 dienen. Durch die verschließbaren Öffnungen 80 besteht zwischen den Raummodulen 12 eine durchgängige räumliche Verbindung. Einerseits kann man sich durch die Öffnungen 80 bewegen oder andererseits auch Material oder Leitungen durchreichen. Die Art der Nutzung hängt natürlich grundsätzlich auch von der Größe der Öffnung 80 bzw. des Durchgangs 82 ab.

Jedes der Raummodule 12 verfügt über eigene Ressourcen, die es dem gesamten System im gekoppelten Zustand dem Raumkörper 10 zur Verfügung stellt. Die Raummodule 12 umfassen als Ressource insbesondere eine prozessorgesteuerte Steuerung 84 mit Speicher 86 und Programm- bzw. Funktionsstrukturen. Die Steuerung 84 regelt die zu steuernden Abläufe in einem jedem Raummodul 12, sofern diese autark tätig sind. Sobald die Raummodule 12 miteinander zu einem Raumkörper 10 gekoppelt sind, vernetzen sich die Steuerungen 84 der einzelnen Raummodule 12. Die Datenleitungen 36 verbinden die Steuerungen 84 über die Kommunikationsanschlüsse 32 in geeigneter Weise. Hierdurch wird die Rechenkapazität des Raumkörpers 10 entsprechend der Anzahl der Raummodule 12 vergrößert. Anstelle einer zentralen Rechnereinheit wird der Raumkörper 10 nun von vielen dezentralen Steuerungen 84 als Steuerungsnetz 88 gesteuert. Bei Ausfall einer Steuerung 84 eines Raummoduls 12 können die Aufgaben und Funktionen von anderen Steuerungen 84 übernommen werden. Das Steuerungsnetz 88 ist vorzugsweise als neuronales Netz aufgebaut. Hierdurch ist das Steuerungsnetz 88 in der Lage zu lernen und sich an unterschiedliche Gegebenheiten selbstständig anzupassen. Diese Anpassungsfähigkeit ist besonders dann gefragt, wenn der Raumkörper 10 unbemannt unterwegs ist.

Das Steuerungsnetz 88 steuert und überwacht sämtliche Vorgänge in dem Raumkörper 10. Damit das Steuerungsnetz 88 auch die Außenwelt erfassen kann, sind geeignete Sensoren 90 vorgesehen. So ist das Steuerungsnetz 88 mit wenigstens einem optischen Sensor 92, wie eine digitale Kamera verbunden. Außerdem liefert wenigstens ein Beschleunigungssensor 94 Bewegungsdaten an das Steuerungsnetz 88. Ein Positionssensor 96 erfasst kontinuierlich die Position des Raumkörpers 10 und liefert entsprechende Daten an das Steuerungsnetz 88. Bewegungssensoren 98 überwachen die Bewegungsabläufe innerhalb des Raumkörpers 10. Die Auswertung der Bewegungsabläufe erfolgt über das Steuerungsnetz 88. Drucksensoren 100 erfassen den Druck innerhalb des Raumkörpers 10. Das Steuerungsnetz 88 kann darüber den Druck in dem Raumkörper 10 auf einen festen Sollwert regeln. Das Steuerungsnetz 88 bildet mit den Sensoren 90 eine Überwachungseinrichtung 102, womit der Raumkörper 10 in seinen Funktionen überwacht werden kann.

Über das Steuerungsnetz 88 werden insbesondere die Kopplungseinrichtung 18, die verschließbaren Öffnungen 80 und die Versorgungsschnittstellen 20 gesteuert. Das Steuerungsnetz 88 koordiniert die gesamte Arbeit und die gesamten Funktionen der Raummodule 12 miteinander.

Ein Raummodul 104 verfügt über einen Antrieb 106. Die Antriebssteuerung wird im vorliegenden Ausführungsbeispiel von dem Steuerungsnetz 88 übernommen. Grundsätzlich ist auch eine eigene Antriebssteuerung für den Antrieb 106 in dem Raummodul 104 möglich. Der Antrieb 106 dient dazu, den Raumkörper 10 zu bewegen. Der Antrieb 106 kann verschiedenartig, wie ein Düsenantrieb oder Raketenantrieb, ausgebildet sein.

Auch andere Ressourcen, wie Gasressourcen, Flüssigkeitsressourcen, thermische und elektrische Ressourcen sind in jedem Raummodul 12 enthalten. Im gekoppelten Zustand liegen die Ressourcen dezentral im gesamten Raumkörper 10 vor. Die Ressourcen stehen dem Raumkörper 10 immer als Ganzes zur Verfügung. Durch die Versorgungsleitungen 24 können die Ressourcen schließlich durch den Raumkörper verschoben werden, wie es für die Funktion und Arbeit jeweils erforderlich ist. Der Ausfall einer Ressource eines Raummoduls 12 wird von den anderen Raummodulen 12, welche keine Fehlfunktion aufweisen, übernommen. Somit bleibt der Raumkörper 10 als Ganzes immer voll funktionstüchtig.

In Fig. 2 wird die Versorgungsschnittstelle 20 für den erfindungsgemäßen Raumkörper 10 mit wenigstens zwei Raummodulen 12 schematisch dargestellt. Die Versorgungsschnittstelle 20 besteht dem Mehrfachanschluss 22, welcher bereits zu Fig. 1 beschrieben wurde. Der Mehrfachanschluss 22 verbindet die unterschiedlichen Versorgungsleitungen 24 in einer standardisierten Weise. Der Mehrfachanschluss 22 enthält insbesondere den Gasanschluss 26, den Anschluss 28 für Flüssigkeiten, den Kommunikationsanschluss 32 und den Elektroanschluss 34 für elektrische Energie.

Der Kommunikationsanschluss 32 ist besonders wichtig für die Vernetzung der Steuerungen 84 zu einem Steuerungsnetz 88. Die Raummodule 12 können über das Steuerungsnetz 88 Daten bzw. Steuerungskommandos austauschen. Durch die Druckleitungen 44 werden Flüssigkeiten und Gase geführt.

Die Fig. 3 zeigt den Raumkörper 10 in einer schematischen und perspektivischen Darstellung, bei dem mehrere gestapelte Raummodule 12 containerartig zusammengesetzt sind. Hier wird deutlich, wie wichtig die Geometrie der Raummodule 12 für die Stapelbarkeit ist. Bei diesem Raumkörper 10 sind auf Außenfläche 108 die Solarzellen 40 für die Energieversorgung, insbesondere zum Aufladen eines Akkumulators angeordnet.

### Bezugszeichenliste

- 10: Raumkörper
- 12: Raummodule
- 14: Quader
- 16: Stirnfläche
- 18: Kopplungseinrichtung
- 20: Versorgungsschnittstelle
- 22: Mehrfachanschluss
- 24: Versorgungsleitungen
- 26: Gasanschluss
- 28: Flüssigkeitsanschluss
- 30: Flüssigkeitsleitungen
- 32: Kommunikationsanschluss
- 34: Elektroanschluss
- 35: Anschluss für Thermalenergie
- 36: Datenleitungen
- 38: Energiegenerator
- 40: Solarzellen
- 42: Elektrische Leitungen
- 44: Druckleitungen
- 46: Magnetischer Kopplungsmechanismus
- 48: Elektromagnet
- 50: Verriegelungsmechanismus
- 52: Druckkörper
- 54: Isolierung
- 56: Schutzschicht
- 58: Innenseite der Raummodule
- 60: Außenseite der Raummodule
- 62, 64: Außenfläche eines Raummoduls
- 66: Innenraum eines Raummoduls
- 68: Interne Versorgungszugänge
- 70: Gasanschluss
- 72: Flüssigkeitsanschluss
- 74: Datenanschluss
- 76: Anschluss für elektrische Energie
- 78: Raummodul für Experimente
- 80: Verschließbare Öffnung
- 82: Durchgänge
- 84: Prozessorgesteuerte Steuerung
- 86: Speicher
- 88: Steuerungsnetz
- 90: Sensoren
- 92: Optischer Sensor
- 94: Beschleunigungssensor
- 96: Positionssensor
- 98: Bewegungssensor
- 100: Drucksensor
- 102: Überwachungseinrichtung
- 104: Raummodul mit Antrieb
- 106: Antrieb
- 108: Außenfläche

## Patentansprüche

1. Raumkörper (10) mit wenigstens zwei Raummodulen (12), welche untereinander austauschbar verbindbar sind, umfassend
a) jeweils wenigstens eine verschließbare Verbindungsöffnung (80) an den Raummodulen (12), über welche beim Verbinden der Raummodule (12) ein Durchgang (82) vorgesehen ist,
b) jeweils wenigstens eine Kopplungseinrichtung (18), welche die Raummodule (12) verbindet,
c) jeweils wenigstens eine Versorgungsschnittstelle (20) zum Koppeln einer Versorgungsleitung (24) der Raummodule und
d) Ressourcen zur Versorgung des Raumkörpers (10) dezentral jeweils in den Raummodulen verteilt sind, wobei ein Ressourcenaustausch zwischen den Raummodulen (12) und/oder ein Ressourcenverbrauch über Versorgungsleitungen (24) erfolgt
**dadurch gekennzeichnet, dass**
e) die Versorgungsschnittstelle (20) magnetisch und/oder elektromagnetisch koppelbar vorgesehen ist und einen andockbaren Mehrfachanschluss (22) umfasst, der für unterschiedliche Versorgungsleitungen (24) gleichzeitig vorgesehen ist.

2. Raumkörper (10) mit wenigstens zwei Raummodulen (12), welche untereinander austauschbar verbindbar sind nach Anspruch 1, **dadurch gekennzeichnet, dass** eine prozessorgesteuerte Steuerung (84) zur Steuerung der Raummodule (12) vorgesehen ist, wobei die Steuerung (84) als eine Ressource zur Versorgung des Raumkörpers (10) dezentral jeweils in den Raummodulen (12) vorgesehen ist und über die Versorgungsschnittstelle (20) zur koordinierten Steuerung des Raumkörpers (10) miteinander vernetzt sind.

3. Raumkörper (10) mit wenigstens zwei Raummodulen (12), welche untereinander austauschbar verbindbar sind nach Anspruch 2, **dadurch gekennzeichnet, dass** die Steuerung (84) als neuronale Netzstruktur ausgebildet ist.

4. Raumkörper (10) mit wenigstens zwei Raummodulen (12), welche untereinander austauschbar verbindbar sind nach einem der Ansprüche 1 bis 3, **dadurch gekennzeichnet, dass** Gasressourcen dezentral jeweils in den Raummodulen (12) zur Versorgung des Raumkörpers (10) vorgesehen sind.

5. Raumkörper (10) mit wenigstens zwei Raummodulen (12), welche untereinander austauschbar verbindbar sind nach einem der Ansprüche 1 bis 4, **dadurch gekennzeichnet, dass** Flüssigkeitsressourcen dezentral jeweils in den Raummodulen (12) zur Versorgung des Raumkörpers (10) vorgesehen sind.

6. Raumkörper (10) mit wenigstens zwei Raummodulen (12), welche untereinander austauschbar verbindbar sind nach einem der Ansprüche 1 bis 5, **dadurch gekennzeichnet, dass** Thermalressourcen dezentral jeweils in den Raummodulen (12) zur Versorgung des Raumkörpers (10) wahlweise zum Kühlen oder zum Heizen vorgesehen sind.

7. Raumkörper (10) mit wenigstens zwei Raummodulen (12), welche untereinander austauschbar verbindbar sind nach einem der Ansprüche 1 bis 6, **dadurch gekennzeichnet, dass** Ressourcen für elektrische Energie dezentral jeweils in den Raummodulen (12) zur Versorgung des Raumkörpers (10) vorgesehen sind.

8. Raumkörper (10) mit wenigstens zwei Raummodulen (12), welche untereinander austauschbar verbindbar sind nach einem der Ansprüche 1 bis 7, **dadurch gekennzeichnet, dass** der Mehrfachanschluss (22)
a) einen Anschluss (26) für Gas und/oder
b) einen Anschluss (28) für Flüssigkeit
c) einen Anschluss (32) für Kommunikation und/oder
d) einen Anschluss für thermische Energie und/oder
e) einen Anschluss (34) für elektrische Energie umfasst.

9. Raumkörper (10) mit wenigstens zwei Raummodulen (12), welche untereinander austauschbar verbindbar sind nach einem der Ansprüche 1 bis 8, **dadurch gekennzeichnet, dass** der Mehrfachanschluss (22) eine Anschlusseinrichtung für Druckleitungen (44) enthält.

10. Raumkörper (10) mit wenigstens zwei Raummodulen (12), welche untereinander austauschbar verbindbar sind nach einem der Ansprüche 1 bis 9, **dadurch gekennzeichnet, dass** die Versorgungsschnittstelle (20) mechanisch koppelbar vorgesehen ist.

11. Raumkörper (10) mit wenigstens zwei Raummodulen (12), welche untereinander austauschbar verbindbar sind nach einem der Ansprüche 1 bis 10, **dadurch gekennzeichnet, dass** die Versorgungsschnittstelle (20) zentral verriegelbar ausgebildet ist.

12. Raumkörper (10) mit wenigstens zwei Raummodulen (12), welche untereinander austauschbar verbindbar sind nach einem der Ansprüche 1 bis 11, **dadurch gekennzeichnet, dass** zur Energieversorgung ein Energiespeicher und/oder eine solare Energieversorgung (40) vorgesehen ist.

13. Raumkörper (10) mit wenigstens zwei Raummodulen (12), welche untereinander austauschbar verbindbar sind nach einem der Ansprüche 1 bis 12, **dadurch gekennzeichnet, dass** der Raumkörper (10) als Druckbehälter (52) ausgestaltet ist.

14. Raumkörper (10) mit wenigstens zwei Raummodulen (12), welche untereinander austauschbar verbindbar sind nach einem der Ansprüche 1 bis 13, **dadurch gekennzeichnet, dass** die Raummodule (12) eine stapelbare Geometrie (14) aufweisen.

15. Raumkörper (10) mit wenigstens zwei Raummodulen (12), welche untereinander austauschbar verbindbar sind nach einem der Ansprüche 1 bis 14, **dadurch gekennzeichnet, dass** die Raummodule (12) eine kubische Geometrie aufweisen.

16. Raumkörper (10) mit wenigstens zwei Raummodulen (12), welche untereinander austauschbar verbindbar sind nach einem der Ansprüche 1 bis 15, **dadurch gekennzeichnet, dass** die Versorgungsschnittstelle (20) jeweils an wenigstens zwei Seiten eines Raummoduls (12) vorgesehen Ist.

17. Raumkörper (10) mit wenigstens zwei Raummodulen (12), welche untereinander austauschbar verbindbar sind nach einem der Ansprüche 1 bis 16, **dadurch gekennzeichnet, dass** eine innere und/oder äußere Isolierung (54) an den Raummodulen (12) vorgesehen ist.

18. Raumkörper (10) mit wenigstens zwei Raummodulen (12), welche untereinander austauschbar verbindbar sind nach einem der Ansprüche 1 bis 17, **dadurch gekennzeichnet, dass** eine prozessorgesteuerte Überwachungseinrichtung (102) für die Raummodule (12) vorgesehen ist.

19. Raumkörper (10) mit wenigstens zwei Raummodulen (12), welche untereinander austauschbar verbindbar sind nach Anspruch 18, **dadurch gekennzeichnet, dass** die Überwachungseinrichtung (102)
a) einen optischen Sensor (92) und/oder
b) einen Beschleunigungssensor (94) und/oder
c) einen Bewegungssensor (98) und/oder
d) einen Temperatursensor und/oder
e) einen Positionssensor (96) umfasst.

20. Raumkörper (10) mit wenigstens zwei Raummodulen (12), welche untereinander austauschbar verbindbar sind nach einem der Ansprüche 1 bis 19, **dadurch gekennzeichnet, dass** wenigstens ein Raummodul (104) einen Antrieb (106) aufweist.

21. Raumkörper (10) mit wenigstens zwei Raummodulen (12), welche untereinander austauschbar verbindbar sind nach Anspruch 20, **dadurch gekennzeichnet, dass** das Raummodul (104) mit Antrieb (106) eine Antriebssteuerung (88) aufweist.

22. Raumkörper (10) mit wenigstens zwei Raummodulen (12), welche untereinander austauschbar verbindbar sind nach einem der vorherigen Ansprüche, **dadurch gekennzeichnet, dass** der Raumkörper (10) in der Luft- und Raumfahrt und/oder zur Verwendung Unterwasser oder in lebensunfreundlicher Umgebung vorgesehen ist.

23. Raumkörper (10) mit wenigstens zwei Raummodulen (12), welche untereinander austauschbar verbindbar sind nach einem der Ansprüche 1 bis 22, **dadurch gekennzeichnet, dass** innerhalb eines Raummodul (12) des Raumkörpers ein interner Versorgungszugang (68) vorgesehen ist.

24. Raumkörper (10) mit wenigstens zwei Raummodulen (12), welche untereinander austauschbar verbindbar sind nach Anspruch 23, **dadurch gekennzeichnet, dass** das der interne Versorgungszugang (68)
a) einen Anschluss (70) für Gas und/oder
b) einen Anschluss (72) für Flüssigkeit und/oder
c) einen Anschluss (74) für Kommunikation und/oder
d) einen Anschluss für thermische Energie und/oder
e) einen Anschluss (76) für elektrische Energie umfasst.

## Claims

1. A space body (10) with at least two space modules (12), which are Interchangeably interconnectable, comprising
a) at least one closable connection opening (80) on each of the space modules (12), via which a passage (82) is provided when connecting the space modules (12),
b) at least one coupling device (18) respectively, which connects the space modules (12),
c) at least one supply interface (20) respectively for coupling a supply line (24) of the space modules, and
d) resources distributed decentrally in each of the space modules to supply the space body (10), whereby resources are exchanged between the space modules (12) and/or resources are consumed via supply lines (24).
**characterized in that**
e) the supply interface (20) Is magnetically and/or electromagnetically couplable and comprises a dockable multiple connector (22), which is provided for simultaneous use with different supply lines (24).

2. A space body (10) with at least two space modules (12), which are interchangeably interconnectable according to claim 1, **characterized in that** a processor-controlled control system (84) for controlling the space modules (12) is provided, whereby the control system (84) is provided decentrally in each of the space modules (12) as a resource to supply the space body (10) and is networked together via the supply interface (20) for coordinated control of the space body (10).

3. A space body (10) With at least two space modules (12), which are interchangeably interconnectable according to claim 2, **characterized in that** the control system (84) is configured as a neural network structure.

4. A space body (10) with at least two space modules . (12), which are interchangeably interconnectable according to one of claims 1 to 3, **characterized in that** gas resources are provided decentrally in each of the space modules (12) to supply the space body (10).

5. A space body (10) with at least two space modules (12), which are interchangeably interconnectable according to one of claims 1 to 4, **characterized in that** liquid resources are provided decentrally in each of the space modules (12) to supply the space body (10).

6. A space body (10) with at least two space modules (12), which are interchangeably interconnectable according to one of claims 1 to 5, **characterized in that** thermal resources are provided decentrally in each of the space modules (12) to selectably cool or heat the space body (10).

7. A space body (10) with at least two space modules (12), which are interchangeably interconnectable according to one of claims 1 to 6, **characterized in that** resources for electrical energy are provided decentrally in each of the space modules (12) to supply the space body (10).

8. A space body (10) with at least two space modules (12), which are interchangeably interconnectable according to one of claims 1 to 7, **characterized in that** the multiple connection (22) comprises
a) a connection (26) for gas and/or
b) a connection (28) for liquid
c) a connection (32) for communication and/or
d) a connection for thermal energy and/or
e) a connection (34) for electrical energy.

9. A space body (10) with at least two space modules (12), which are interchangeably interconnectable according to one of claims 1 to 8, **characterized In that** the multiple connection (22) comprises a connection device for pressure lines (44).

10. A space body (10) with at least two space modules (12), which are interchangeably interconnectable according to one of claims 1 to 9, **characterized in that** the supply interface (20) is provided for mechanical coupling.

11. A space body (10) with at least two space modules (12), which are interchangeably Interconnectable according to one of claims 1 to 10, **characterized in that** the supply interface (20) is centrally lockable.

12. A space body (10) with at least two space modules (12), which are interchangeably interconnectable according to one of claims 1 to 11, **characterized In that** an energy storage device and/or a solar energy supply (40) is provided for supplying energy.

13. A space body (10) with at least two space modules (12), which are interchangeably interconnectable according to one of claims 1 to 12, **characterized in that** the space body (10) is designed as a pressure vessel (52).

14. A space body (10) with at least two space modules (12), which are interchangeably interconnectable according to one of claims 1 to 13, **characterized in that** the space modules (12) have a stackable geometry (14).

15. A space body (10) with at least two space modules (12), which are interchangeably interconnectable according to one of claims 1 to 14, **characterized in that** the space modules (12) have a cubic geometry.

16. A space body (10) with at least two space modules (12), which are interchangeably Interconnectable according to one of claims 1 to 15, **characterized in that** the supply interface (20) is provided on at least two sides of each space module (12).

17. A space body (10) with at least two space modules (12), which are interchangeably interconnectable according to one of claims 1 to 16, **characterized in that** an inner and/or outer insulation (54) is provided on the space modules (12).

18. A space body (10) with at least two space modules (12), which are interchangeably interconnectable according to one of claims 1 to 17, **characterized in that** a processor-controlled monitoring device (102) is provided for the space modules (12).

19. A space body (10) with at least two space modules (12), which are interchangeably interconnectable according to claim 18, **characterized in that** the monitoring device (102) comprises
a) an optical sensor (92) and/or
b) an acceleration sensor (94) and/or
c) a motion sensor (98) and/or
d) a temperature sensor and/or
e) a position sensor (98).

20. A space body (10) with at least two space modules (12), which are Interchangeably interconnectable according to one of claims 1 to 19, **characterized in that** at least one space module (104) has a drive (106).

21. A space body (10) with at least two space modules (12), which are interchangeably interconnectable according to claim 20, **characterized in that** the space module (104) with a drive (106) has a drive controller (88).

22. A space body (10) with at least two space modules (12), which are interchangeably interconnectable according to one of the preceding claims, **characterized In that** the space body (10) is provided for air and space travel and/or for use underwater or in a hostile environment.

23. A space body (10) with at least two space modules (12), which are interchangeably interconnectable according to one of claims 1 to 22, **characterized In that** an internal supply access (68) is provided within a space module (12) of the space body.

24. A space body (10) with at least two space modules (12), which are interchangeably intereconnectable according to claim 23, **characterized in that** the internal supply access (68) comprises
a) a connection (70) for gas and/or
b) a connection (72) for liquid and/or
c) a connection (74) for communication and/or
d) a connection for thermal energy and/or
e) a connection (76) for electrical energy.

## Revendications

1. Corps spatial (10) muni d'au moins deux modules spatiaux (12) qui peuvent être reliés ensemble de manière interchangeable, comprenant
(a) pour chaque module spatial au moins un orifice de liaison (80), situé sur les modules spatiaux (12) et pouvant être fermé hermétiquement, par l'intermédiaire duquel un passage (82) est prévu lorsque les modules spatiaux (12) sont reliés ensemble,
(b) pour chaque module spatial au moins un dispositif d'accouplement (18) reliant les modules spatiaux (12) ensemble,
(c) pour chaque module spatial au moins une interface d'alimentation (20) destinée à accoupler une conduite d'alimentation (24) des modules spatiaux et
(d) des ressources destinées à alimenter le corps spatial (10) étant réparties décentralement dans chacun des modules spatiaux, un échange de ressources entre les modules spatiaux (12) et/ou une consommation des ressources s'effectuant par l'intermédiaire de conduites d'alimentation (24),
**caractérisé en ce que**
(e) l'interface d'alimentation (20) est prévue de manière à pouvoir être accouplée magnétiquement et/ou électromagnétiquement et comprend un raccord multiple (22) ancrable qui est prévu simultanément pour différentes conduites d'alimentation (24).

2. Corps spatial (10) muni d'au moins deux modules spatiaux (12) qui peuvent être reliés ensemble de manière interchangeable selon la revendication 1, **caractérisé en ce qu'**un dispositif de commande (84) commandé par processeur est prévu afin de commander les modules spatiaux (12), le dispositif de commande (84) étant prévu en tant que ressource destinée à alimenter le corps spatial (10) décentralement dans chacun des modules spatiaux (12) interconnectés par l'intermédiaire de l'interface d'alimentation (20) afin de commander de manière coordonnée le corps spatial (10).

3. Corps spatial (10) muni d'au moins deux modules spatiaux (12) qui peuvent être reliés ensemble de manière interchangeable selon la revendication 2, **caractérisé en ce que** le dispositif de commande (84) est configuré sous forme de structure de réseau neuronal.

4. Corps spatial (10) muni d'au moins deux modules spatiaux (12) qui peuvent être reliés ensemble de manière interchangeable selon l'une quelconque des revendications 1 à 3, **caractérisé en ce que** des ressources en gaz sont prévues décentralement dans chacun des modules spatiaux (12) afin d'alimenter le corps spatial (10).

5. Corps spatial (10) muni d'au moins deux modules spatiaux (12) qui peuvent être reliés ensemble de manière interchangeable selon l'une quelconque des revendications 1 à 4, **caractérisé en ce que** des ressources en liquide sont prévues décentralement dans chacun des modules spatiaux (12) afin d'alimenter le corps spatial (10).

6. Corps spatial (10) muni d'au moins deux modules spatiaux (12) qui peuvent être reliés ensemble de manière interchangeable selon l'une quelconque des revendications 1 à 5, **caractérisé en ce que** des ressources thermales sont prévues décentralement dans chacun des modules spatiaux (12) afin d'alimenter le corps spatial (10) soit à des fins de refroidissement soit à des fins de chauffage.

7. Corps spatial (10) muni d'au moins deux modules spatiaux (12) qui peuvent être reliés ensemble de manière interchangeable selon l'une quelconque des revendications 1 à 6, **caractérisé en ce que** des ressources en énergie électrique sont prévues décentralement dans chacun des modules spatiaux (12) afin d'alimenter le corps spatial (10).

8. Corps spatial (10) muni d'au moins deux modules spatiaux (12) qui peuvent être reliés ensemble de manière interchangeable selon l'une quelconque des revendications 1 à 7, **caractérisé en ce que** le raccord multiple (22) comprend
(a) un raccord (26) pour du gaz et/ou
(b) un raccord (28) pour du liquide
(c) un raccord (32) pour la communication et/ou
(d) un raccord pour de l'énergie thermique et/ou
(e) un raccord (34) pour de l'énergie électrique.

9. Corps spatial (10) muni d'au moins deux modules spatiaux (12) qui peuvent être reliés ensemble de manière interchangeable selon l'une quelconque des revendications 1 à 8, **caractérisé en ce que** le raccord multiple (22) comprend une installation de raccordement pour conduites sous pression (44) .

10. Corps spatial (10) muni d'au moins deux modules spatiaux (12) qui peuvent être reliés ensemble de manière interchangeable selon l'une quelconque des revendications 1 à 9, **caractérisé en ce que** l'interface d'alimentation (20) est prévue de manière à pouvoir être accouplée mécaniquement.

11. Corps spatial (10) muni d'au moins deux modules spatiaux (12) qui peuvent être reliés ensemble de manière interchangeable selon l'une quelconque des revendications 1 à 10, **caractérisé en ce que** l'interface d'alimentation (20) est configurée de manière à pouvoir être verrouillée centralement.

12. Corps spatial (10) muni d'au moins deux modules spatiaux (12) qui peuvent être reliés ensemble de manière interchangeable selon l'une quelconque des revendications 1 à 11, **caractérisé en ce qu'**un accumulateur d'énergie et/ou un dispositif d'alimentation en énergie solaire (40) est prévu pour l'alimentation en énergie.

13. Corps spatial (10) muni d'au moins deux modules spatiaux (12) qui peuvent être reliés ensemble de manière interchangeable selon l'une quelconque des revendications 1 à 12, **caractérisé en ce que** le corps spatial (10) est configuré sous forme de réservoir sous pression (52).

14. Corps spatial (10) muni d'au moins deux modules spatiaux (12) qui peuvent être reliés ensemble de manière interchangeable selon l'une quelconque des revendications 1 à 13, **caractérisé en ce que** les modules spatiaux (12) sont à géométrie empilable (14).

15. Corps spatial (10) muni d'au moins deux modules spatiaux (12) qui peuvent être reliés ensemble de manière interchangeable selon l'une quelconque des revendications 1 à 14, **caractérisé en ce que** les modules spatiaux (12) sont à géométrie cubique.

16. Corps spatial (10) muni d'au moins deux modules spatiaux (12) qui peuvent être reliés ensemble de manière interchangeable selon l'une quelconque des revendications 1 à 15, **caractérisé en ce que** l'interface d'alimentation (20) est prévue à chaque fois sur au moins deux faces d'un module spatial (12).

17. Corps spatial (10) muni d'au moins deux modules spatiaux (12) qui peuvent être reliés ensemble de manière interchangeable selon l'une quelconque des revendications 1 à 16, **caractérisé en ce qu'**une isolation (54) intérieure et/ou extérieure est prévue sur les modules spatiaux (12).

18. Corps spatial (10) muni d'au moins deux modules spatiaux (12) qui peuvent être reliés ensemble de manière interchangeable selon l'une quelconque des revendications 1 à 17, **caractérisé en ce qu'**une installation de surveillance (102) commandée par processeur est prévue pour les modules spatiaux (12).

19. Corps spatial (10) muni d'au moins deux modules spatiaux (12) qui peuvent être reliés ensemble de manière interchangeable selon la revendication 18, **caractérisé en ce que** l'installation de surveillance (102) comprend
(a) un capteur optique (92) et/ou
(b) un capteur d'accélération (94) et/ou
(c) un capteur de déplacement (98) et/ou
(d) un capteur de température et/ou
(e) un capteur de position (96).

20. Corps spatial (10) muni d'au moins deux modules spatiaux (12) qui peuvent être reliés ensemble de manière interchangeable selon l'une quelconque des revendications 1 à 19, **caractérisé en ce qu'**au moins un module spatial (104) présente un dispositif d'entraînement (106).

21. Corps spatial (10) muni d'au moins deux modules spatiaux (12) qui peuvent être reliés ensemble de manière interchangeable selon la revendication 20, **caractérisé en ce que** le module spatial (104) muni du dispositif d'entraînement (106) présente un dispositif de commande du dispositif d'entraînement (88).

22. Corps spatial (10) muni d'au moins deux modules spatiaux (12) qui peuvent être reliés ensemble de manière interchangeable selon l'une quelconque des revendications précédentes, **caractérisé en ce que** le corps spatial (10) est prévu dans l'aéronautique et l'aérospatiale et/ou pour être utilisé sous l'eau ou dans un environnement hostile.

23. Corps spatial (10) muni d'au moins deux modules spatiaux (12) qui peuvent être reliés ensemble de manière interchangeable selon l'une quelconque des revendications 1 à 22, **caractérisé en ce qu'**un accès d'alimentation interne (68) est prévu à l'intérieur d'un module spatial (12) du corps spatial.

24. Corps spatial (10) muni d'au moins deux modules spatiaux (12) qui peuvent être reliés ensemble de manière interchangeable selon la revendication 23, **caractérisé en ce que** l'accès d'alimentation interne (68) comprend
(a) un raccord (70) pour du gaz et/ou
(b) un raccord (72) pour du liquide
(c) un raccord (74) pour la communication et/ou
(d) un raccord pour de l'énergie thermique et/ou
(e) un raccord (76) pour de l'énergie électrique.
